# EUROPÄISCHE PATENTANMELDUNG

(11) **EP 4 636 442 A1**
(43) Veröffentlichungstag der Anmeldung: **22.10.2025**
(21) Anmeldenummer: 25169408.9
(22) Anmeldetag: 09.04.2025
(51) Int. Cl.: G01V 8/10, G01S 7/481

(54) **OPTISCHER SENSOR**

(30) Priorität: 15.04.2024 DE 202024101838 U
(71) Anmelder: Leuze electronic GmbH + Co. KG, 73277 Owen/Teck (DE)
(72) Erfinder: Droemer, Jörg, 72574 Bad Urach-Wittlingen (DE); Kharrazian, Reza, 72762 Reutlingen (DE); Dümmel, Thomas, 72584 Hülben (DE)
(74) Vertreter: Ruckh, Rainer Gerhard

(57) **Zusammenfassung**

Die Erfindung betrifft einen optischen Sensor (1) zur Erfassung von Objekten, mit einem Gehäuse (2), in welchem Elektronikkomponenten und wenigstens eine Sensorkomponente gelagert sind. Wenigstens eine Elektronikkomponente generiert in Abhängigkeit von Sensorsignalen der oder einer Sensorkomponente ein Ausgangssignal. Es ist als Elektronikkomponente eine Leiterplatte (3) vorhanden, wobei auf einer eine Montageseite bildenden Seite die Sensorkomponente in einem Tubus (6) liegend angeordnet ist. Der Tubus (6) ist mit Befestigungsmitteln befestigt, die alle auf oder an der Montageseite angeordnet und an der Montageseite montierbar sind.

## Beschreibung

Die Erfindung betrifft einen optischen Sensor.

Derartige optische Sensoren werden generell zur Erfassung von Objekten eingesetzt. Hierzu weist der optische Sensor in einem Gehäuse integrierte Sensorkomponenten und Elektronikkomponenten auf.

Typischerweise weist der optische Sensor eine Lichtstrahlen emittierende Sendereinheit und eine Empfängereinheit, die von einem Objekt zurückreflektierte Lichtstrahlen empfängt, auf.

Wenigstens eine Elektronikkomponente bildet eine Auswerteeinheit, in welcher in Abhängigkeit von Sensorsignalen der Sensorkomponenten ein Ausgangssignal generiert wird.

Der optische Sensor kann zur Erfassung von Objekten in einem Überwachungsbereich eingesetzt werden. In diesem Fall generiert der optische Sensor als Ausgangssignal ein Objektfeststellungssignal, welches signalisiert, ob ein Objekt im Überwachungsbereich vorhanden ist oder nicht.

Der optische Sensor kann insbesondere auch zur Erfassung von Codes wie z.B. Barcodes oder 2D-Codes eingesetzt werden, d.h. der optische Sensor bildet dann einen Codeleser. In diesem Fall werden in der Auswerteeinheit die in den Sensorsignalen der Sensorkomponenten enthaltenen Codeinformationen dekodiert, so dass als Ausgangssignal der erfasste Code ausgegeben werden kann. Insbesondere bei einer Ausführungsform in Form eines Codelesers ist die Empfängereinheit in Form eines Bildsensors, d.h. eines Imagers ausgebildet. Vorteilhaft ist dem Bildsensor eine Sendereinheit in Form einer Beleuchtungseinheit zugeordnet, die beispielsweise eine Mehrfachanordnung von Leuchtdioden aufweist.

Dem Bildsensor ist typischerweise ein Objektiv vorgeordnet, welches in einem Tubus gelagert ist.

Der Bildsensor ist auf einer Seite einer Leiterplatte angeordnet. Zur Montage des Tubus muss dieser auf derselben Seite der Leiterplatte befestigt werden, so dass der Bildsensor im Tubus liegt und das Objektiv dem Bildsensor vorgeordnet ist.

Bei bekannten optischen Sensoren wird der Tubus mit Schrauben an der Leiterplatte befestigt. Die Schrauben durchsetzen Bohrungen in der Leiterplatte, wobei an der gegenüberliegenden Seite der Leiterplatte die Enden der Schrauben ausmünden und dort ggf. fixiert werden. In ähnlicher Weise können als Befestigungsmittel für den Tubus Rasthaken vorgesehen sein, die ebenfalls Bohrungen in der Leiterplatte durchsetzen, wobei die Enden der Rasthaken über die gegenüberliegende Seite der Leiterplatte hervorstehen und dort verrastet sind.

Eine derartige Montage ist dann problematisch oder überhaupt nicht durchführbar, wenn der Tubus mit dem Bildsensor auf einer Seite der Leiterplatte angeordnet sein soll und die gegenüberliegende Seite eine Bauteilseite bildet, auf welcher mehrere Bauteile, d.h. Elektronikkomponenten platziert werden müssen. Zu diesen Elektronikkomponenten kann insbesondere auch eine großflächige Rechnereinheit wie z.B. ein Microcontroller gehören, der die Auswerteeinheit des optischen Sensors bildet.

Um Leitungsstörungen auf Leitungen zur Datenübertragung, die der Bildsensor mit dem Microcontroller verbinden, gering zu halten oder zu vermeiden, sollten diese Leitungen möglichst kurz sein. Um dies zu erreichen sollte der Microcontroller gegenüberliegend zum Bildsensor auf der Leiterplatte platziert sein.

Bei derartigen Konfigurationen fehlt auf der Bauteilseite der Leiterplatte der notwendige Raum für Befestigungsmittel des Tubus bzw. für eine Betätigung der Befestigungsmittel.

Der Erfindung liegt die Aufgabe zugrunde einen optischen Sensor der eingangs genannten Art so auszubilden, dass dieser bei kompaktem Aufbau einfach montiert werden kann.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten, mit einem Gehäuse, in welchem Elektronikkomponenten und wenigstens eine Sensorkomponente gelagert sind. Eine Elektronikkomponente generiert in Abhängigkeit von Sensorsignalen der oder einer Sensorkomponente ein Ausgangssignal. Als Elektronikkomponente ist eine Leiterplatte vorhanden, wobei auf einer eine Montageseite bildenden Seite die Sensorkomponente in einem Tubus liegend angeordnet ist. Der Tubus ist mit Befestigungsmitteln befestigt, die alle auf oder an der Montageseite angeordnet und an der Montageseite montierbar sind.

Ein wesentlicher Vorteil der Erfindung besteht darin, dass auf der Montageseite der Leiterplatte nicht nur die Sensorkomponente montiert werden kann. Vielmehr kann auch der Tubus, in dem die Sensorkomponente gelagert ist komplett an der Montageseite der Leiterplatte montiert werden. Dies wird erfindungsgemäß dadurch erreicht, dass die Befestigungsmittel zur Fixierung des Tubus auf der Leiterplatte nicht nur komplett auf oder an der Montageseite der Leiterplatte angeordnet sind. Vielmehr können die Befestigungsmittel auch auf dieser Montagseite komplett betätigt werden, um den Tubus auf der Leiterplatte zu befestigen.

Dadurch ergibt sich als wesentlicher Vorteil, dass die der Montageseite gegenüberliegende Seite eine Bauteilseite bilden kann, die komplett für die Bestückung mit Bauteilen, d.h. Elektronikkomponenten frei ist.

Damit lässt sich ein kompakter Aufbau des optischen Sensors realisieren.

Gemäß einer vorteilhaften Ausführungsform ist die im Tubus gelagerte Sensorkomponente ein Bildsensor.

Dabei ist vorteilhaft im Tubus ein dem Bildsensor vorgeordnetes Objektiv angeordnet.

Der Bildsensor d.h. Imager kann beispielsweise von einem matrixförmigen CMOS- oder CCD-Array gebildet sein, das Objektiv besteht in bekannter Weise aus einer Linsenanordnung.

In diesem Fall kann der optische Sensor als Codeleser ausgebildet sein, mit dem Barcodes und 2D-Codes erfasst werden können.

Zweckmäßig sind bei einem derartigen optischen Sensor auf der Montageseite der Leiterplatte Lichtstrahlen emittierende Leuchtdioden angeordnet, die eine Beleuchtungseinheit bilden.

Mit den Lichtstrahlen der Beleuchtungseinheit wird das Sichtfeld des Bildsensors ausgeleuchtet.

Vorteilhaft ist auf der Bauteilseite der Leiterplatte als Elektronikkomponente eine Rechnereinheit angeordnet, die eine Auswerteeinheit ausbildet.

In der Auswerteeinheit werden die Sensorsignale der oder einer Sensorkomponente zur Generierung des Ausgangssignals ausgewertet.

Die Rechnereinheit kann insbesondere als Microcontroller ausgebildet sein.

Auch der Microcontroller als großes und flächiges Bauteil kann auf der Bauteilseite der Leiterplatte angeordnet sein, da auf der Bauteilseite erfindungsgemäß keine Befestigungsmittel vorhanden sind.

Besonders vorteilhaft ist der Microcontroller gegenüberliegend zu dem im Tubus gelagerten Bildsensor angeordnet.

Der Bildsensor ist vorteilhaft durch MIPI-Leitungen mit dem die Auswerteeinheit bildenden Microcontroller verbunden. MIPI-Leitungen sind von dem MIPI-Konsortium genormte serielle Schnittstellen-Leitungen, die hohe Datenübertragungsraten aufweisen.

Da der Bildsensor direkt dem Microcontroller gegenüberliegend angeordnet sein kann, können die MIPI-Leitungen kurze Leitungslängen aufweisen, was eine wesentliche Voraussetzung für eine störungsfreie Datenübertragung zwischen Bildsensor und Microcontroller ist.

Gemäß einer konstruktiv vorteilhaften Ausgestaltung weist der Tubus zur Zentrierung auf der Leiterplatte Passstifte auf. Die Passstifte sind in Zentrier-Sackloch-Bohrungen einführbar, die an der Montageseite der Leiterplatte ausmünden.

Die Zentrier-Sackloch-Bohrungen können in einem Einmessvorgang zur Montage des optischen Sensors, insbesondere mittels Bildverarbeitungsmethode exakt in Sollpositionen in der Leiterplatte eingearbeitet werden. Damit ist gewährleistet, dass durch Einführen der Passstifte in die Zentrier-Sackloch-Bohrung der Tubus exakt positioniert ist.

Gemäß einer ersten Variante der Erfindung bilden die Passstifte Befestigungsmittel zur Befestigung des Tubus auf der Leiterplatte. Die Passstifte sind dann in den Zentrier-Sackloch-Bohrungen durch Klebeverbindungen fixiert.

Dies stellt eine konstruktiv besonders einfache Möglichkeit der Befestigung des Tubus an der Montageseite der Leiterplatte dar, da in diesem Fall keine separaten Befestigungsmittel vorgesehen werden müssen, sondern die Zentriermittel zur Befestigung des Tubus genutzt werden können. Besonders vorteilhaft ist, dass die Befestigung des Tubus werkzeuglos erfolgen kann. Voraussetzung für eine derartige Befestigung ist lediglich, dass der Tubus aus einem klebbaren Material besteht.

Gemäß einer zweiten Variante der Erfindung ist auf der Montageseite eine ringförmige Halterung mit von deren Oberseite hervorstehenden Rastmitteln befestigt. Der Tubus ist auf der Montageseite der Leiterplatte aufsitzend mittels der Rastmittel befestigbar.

Dabei ist die Halterung auf der Montageseite der Leiterplatte mittels einer Lötverbindung oder einer Klebeverbindung fixiert.

Damit kann auch die zur Befestigung des Tubus erforderliche Halterung an der Montageseite durch Löten oder Kleben befestigt werden, d.h. auch in diesem Fall sind keine Befestigungsmittel auf der Bauteilseite vorhanden und die Halterung kann von der Montageseite her an der Leiterplatte montiert werden.

Die Befestigung des Tubus selbst kann werkzeuglos durch einfaches Einrasten an den Rastmitteln der Halterung erfolgen.

Gemäß einer konstruktiv vorteilhaften Ausgestaltung ist eine in Umfangsrichtung der ringförmigen Halterung rotationssymmetrische Anordnung von identisch ausgebildeten Rastmitteln vorgesehen.

Dadurch wird eine in Umfangsrichtung des Tubus stabile und gleichförmige Befestigung erhalten.

Zweckmäßig sind die Rastmittel in Form von federnden Haken ausgebildet.

Die federnden Haken bilden einfach betätigbare Rastmittel und sorgen mit den Federkräften der Haken für einen stabilen Halt des Tubus an der Halterung.

Zweckmäßig ist die Halterung mit den Rastmitteln von einem Blechteil gebildet.

Damit kann die Halterung kostengünstig und rationell hergestellt werden.

Gemäß einer vorteilhaften Ausgestaltung weist der Tubus einen hohlzylindrischen Grundkörper auf. An dessen Unterseite ist ein ringförmiger, über die äußere Mantelfläche des Grundkörpers hervorstehender Sockel vorhanden.

In diesem Fall ist der Tubus dadurch auf der Montageseite der Leiterplatte befestigt, dass die Rastmittel in Eingriff mit dem Sockel sind.

Mit dem Sockel wird auf einfache Weise eine Aufnahme für die Rastmittel bereitgestellt.

Gemäß einer dritten Variante der Erfindung weist die Leiterplatte an deren Montageseite ausmündende Sacklöcher auf, in welchen jeweils eine Gewindebuchse gelagert ist. Zur Fixierung des Tubus auf der Leiterplatte werden in Aufnahmen des Tubus gelagerte Schrauben in die Gewindebuchsen eingeschraubt.

Auch in diesem Fall befinden sich die Befestigungsmittel an der Montageseite der Leiterplatte und können dort für die Befestigung des Tubus betätigt werden.

Vorteilhaft sind die Gewindebuchsen in den Sacklöchern eingelötet.

Damit kann die Befestigung der Gewindebuchsen allein an der Montageseite der Leiterplatte erfolgen.

Gemäß einer konstruktiv vorteilhaften Ausgestaltung weist der Tubus einen hohlzylindrischen Grundkörper auf. An der Unterseite des Grundkörpers mündet ein ringförmiger Ansatz aus, in welchem die Schrauben gelagert sind.

Dabei sind die Schrauben in Bohrungen an der Oberseite des ringförmigen Ansatzes gelagert.

Somit sind die Schrauben an der Montageseite der Leiterplatte für die Befestigung des Tubus zugänglich.

Die Erfindung wird im Folgenden anhand der Zeichnungen erläutert. Es zeigen.
- Figur 1:: Schematische Darstellung eines Ausführungsbeispiels des erfindungsgemäßen optischen Sensors.
- Figur 2:: Erste Ausführungsform einer Tubus-Befestigung für den optischen Sensor gemäß Figur 1.
- Figur 3:: Zweite Ausführungsform einer Tubus-Befestigung für den optischen Sensor gemäß Figur 1.
- Figur 4:: Dritte Ausführungsform einer Tubus-Befestigung für den optischen Sensor gemäß Figur 1.

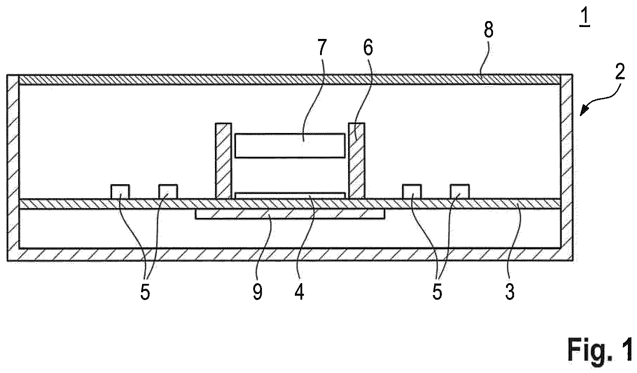

Figur 1 zeigt stark schematisiert und nicht maßstäblich ein Ausführungsbeispiel des erfindungsgemäßen optischen Sensors 1. Der optische Sensor 1 ist im vorliegenden Fall als Codeleser ausgebildet, mittels dessen Barcodes und 2D-Codes erfasst werden können.

Die Elektronikkomponenten und Sensorkomponenten des optischen Sensors 1 sind in einem aus nicht transparentem Material bestehenden Gehäuse 2 integriert.

Als zentrale Elektronikkomponente ist eine Leiterplatte 3 im Gehäuse 2 gelagert. Auf einer Montageseite der Leiterplatte 3 sind als Sensorkomponenten ein Bildsensor 4 und mehrere den Bildsensor 4 umgebende Leuchtdioden 5 gelagert. Der Bildsensor 4 ist z.B. von einem matrixförmigen CCD- oder CMOS-Array gebildet. Die Lichtstrahlen emittierenden Leuchtdioden 5 bilden eine Beleuchtungseinheit, mit der der Sichtbereich des Bildsensors 4 ausgeleuchtet wird.

Der Bildsensor 4 befindet sich in einem im wesentlichen hohlzylindrischen, aus nicht transparentem Material bestehenden Tubus 6. Im Tubus 6 ist ein dem Bildsensor 4 vorgeordnetes Objektiv 7 gelagert, das zur Fokussierung von Lichtstrahlen auf den Bildsensor 4 dient.

In einer Frontwand des Gehäuses 2 ist eine Scheibe 8 gelagert, die aus transparentem, d.h. für die Lichtstrahlen durchlässigen Material besteht.

Auf einer der Montageseite gegenüberliegenden Bauteilseite ist ein Microcontroller 9 gelagert, der eine Auswerteeinheit bildet. Anstelle eines Microcontrollers 9 kann auch eine andere Rechnereinheit vorgesehen sein.

Die von den Leuchtdioden 5 emittierten Lichtstrahlen werden durch die Scheibe 8 in einen Erfassungsbereich geführt. Von einem Code, der auf einem Objekt aufgebracht ist, werden Lichtstrahlen über die Scheibe 8 und das Objekt zum Bildsensor 4 geführt. Die dabei vom Bildsensor 4 generierten Sensorsignale werden in der Auswerteeinheit ausgewertet. Dabei wird anhand der in den Sensorsignalen enthaltenen Codeinformationen in der Auswerteeinheit der Code dekodiert, was als Ausgangssignal von optischen Sensoren 1 ausgegeben wird.

Erfindungsgemäß ist der Tubus 6 auf der Montageseite der Leiterplatte 3 mit Befestigungsmitteln befestigt, die ausschließlich auf oder an der Montageseite angeordnet sind und von der Montageseite der Leiterplatte 3 aus betätigt werden können, so dass die gesamte Montage des Tubus 6 an der Montageseite der Leiterplatte 3 erfolgt. Die Bauteilseite ist damit komplett frei für Elektronikkomponente, d.h. Bauteile.

Dies wird insbesondere dazu ausgenutzt, dass sich der Bildsensor 4 und der Microcontroller 9 beidseits der Leiterplatten 3 gegenüber liegen. Dadurch können der Bildsensor 4 und der Microcontroller 9 über sehr kurze (nicht dargestellte) MIPI-Leitungen verbunden sein, so dass über diese eine störungsfreie Datenübertragung zwischen Bildsensor 4 und Microcontroller 9 erfolgen kann.

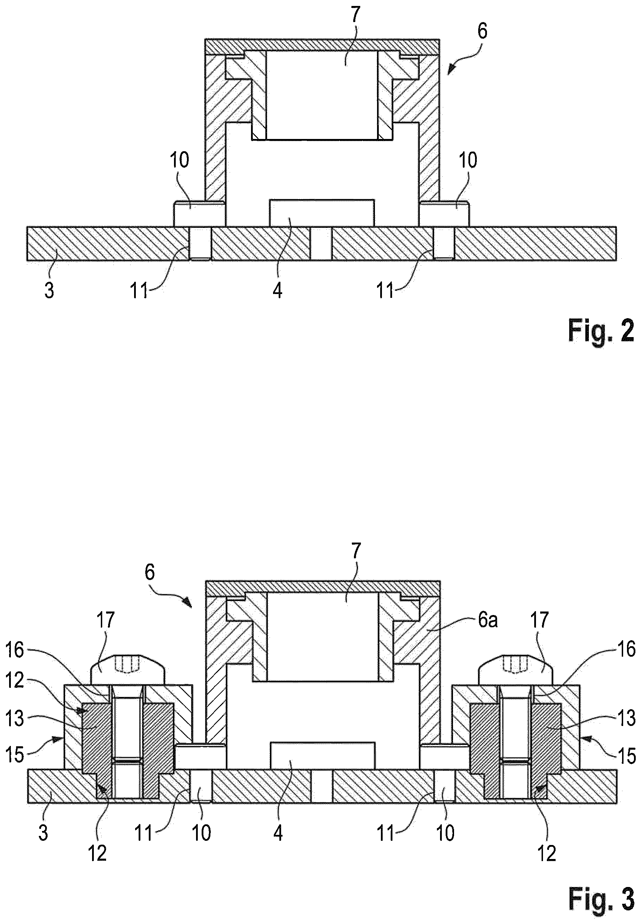

Figur 2 zeigt ein erstes Ausführungsbeispiel der erfindungsgemäßen Tubusbefestigung.

Figur 2 zeigt einen Ausschnitt der Leiterplatte 3 des optischen Sensors 1 mit einem auf dessen Montageseite angeordneten Bildsensors 4. Der Bildsensor 4 ist in dem Tubus 6 angeordnet, ebenso wie das Objektiv 7.

Am unteren Rand des Tubus 6 münden Passstifte 10 aus, die vorteilhaft in gleichen Abständen in Umfangrichtung des Tubus 6 verteilt angeordnet sind.

Die Passstifte 10 sind in Zentrier-Sackloch-Bohrungen 11 der Leiterplatte 3 eingeführt, wobei die Zentrier-Sackloch-Bohrungen 11 an der Montageseite der Leiterplatte 3 ausmünden. Die Zentrier-Sackloch-Bohrungen 11 werden vorab in einem Einmessvorgang in Sollpositionen in die Leiterplatte 3 eingearbeitet. Werden danach die Passstifte 10 des Tubus 6 in die Zentrier-Sackloch-Bohrungen 11 eingeführt, ist der Tubus 6 exakt in seiner Sollposition an der Leiterplatte 3 zentriert.

Im vorliegenden Fall bilden die Passstifte 10 auch die Befestigungsmittel zur Befestigung des Tubus 6, hierzu werden Klebeverbindungen zwischen den Passstiften 10 und den Wandsegmenten der Zentrier-Sackloch-Bohrungen 11 hergestellt.

Voraussetzung hierfür ist, dass der Tubus 6 aus klebefähigem Material besteht.

Figur 3 zeigt ein zweites Ausführungsbeispiel der erfindungsgemäßen Tubusbefestigung, wobei Figur 3 wieder einen Ausschnitt der Leiterplatte 3 mit auf deren Oberseite gelagerten Bildsensor 4 und Tubus 6 zeigt.

Entsprechend der Ausführungsform gemäß Figur 2 sind an der Unterseite des Tubus 6 wieder Passstifte 10 vorgesehen, die in Zentrier-Sackloch-Bohrungen 11 der Leiterplatte 3 greifen. Allerdings dienen die Passstifte 10 in diesem Fall nur zur Zentrierung des Tubus 6 und nicht zur Tubusbefestigung.

Zur Tubusbefestigung sind im vorliegenden Fall Sacklöcher 12 in die Leiterplatte 3 eingearbeitet, die an der Montageseite der Leiterplatte 3 ausmünden. In die Sacklöcher sind Gewindebuchsen 13 eingelötet.

Der Tubus 6 weist einen hohlzylindrischen Grundkörper 6a auf, an dessen Unterseite ein ringförmiger Ansatz 15 ausmündet. In die Oberseite des ringförmigen Ansatzes 15 sind Bohrungen 16 eingearbeitet. Die Bohrungen 16 sind in Umfangsrichtung des Tubus 6 äquidistant angeordnet und bilden eine zur Symmetrieachse des Tubus 6 rotationssymmetrische Anordnung.

In jeder Bohrung 16 ist eine Schraube 17 gelagert.

Die Tubusbefestigung erfolgt dann derart, dass in jede Gewindebuchse 13 eine Schraube 17 eingeschraubt wird.

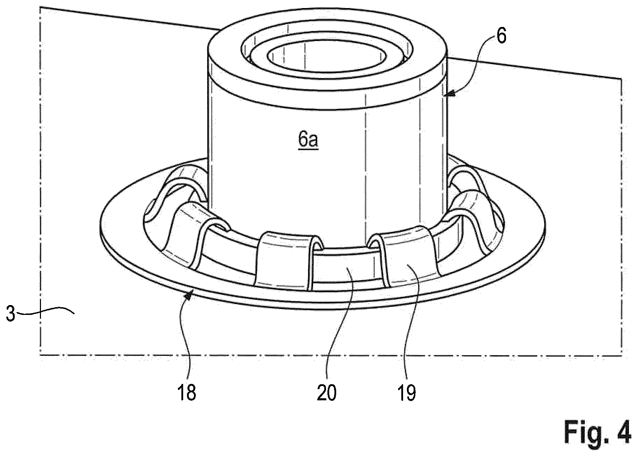

Figur 4 zeigt ein drittes Ausführungsbeispiel der erfindungsgemäßen Tubusbefestigung. Dabei zeigt Figur 4 einen Ausschnitt der Leiterplatte 3 mit dem darauf gelagerten Tubus 6.

Die Tubusbefestigung erfolgt im vorliegenden Fall mittels einer Rastmittel aufweisenden ringförmigen Halterung 18, die durch eine Löt- oder Klebeverbindung auf der Montageseite der Leiterplatte 3 fixiert ist.

Die Rastmittel sind einstückig mit der Halterung 18 ausgebildet und von einem Blechteil gebildet. Die Rastmittel sind im vorliegenden Fall von federnden Haken 19 gebildet. Die identisch ausgebildeten Haken 19 sind in Umfangsrichtung der Halterung 18 äquidistant angeordnet und bilden eine rotationssymmetrische Anordnung. Die Haken 19 münden an der Oberseite der Halterung 18 aus.

Daran angepasst weist der Tubus 6 einen hohlzylindrischen Grundkörper 6a auf, an dessen Unterseite ein von der äußeren Mantelfläche des Grundkörpers 6a hervorstehender ringförmiger Sockel 20 anschließt. Der Tubus 6 ist mit der Unterseite des Sockels 20 auf der Leiterplatte 3 lagerbar.

Zur Befestigung des Tubus 6 wird dieser mit dem Sockel 20 in die ringförmige Halterung 18 eingeführt. Die federnden Haken 19 federn dabei zurück, so dass der Sockel 20 auf die Leiterplatte 3 aufgesetzt werden kann. Sobald der Sockel 20 des Tubus 6 auf der Leiterplatte 3 aufsitzt, federn die Haken 19 zurück und liegen mit Anpressdruck auf der Oberseite des Sockels 20 auf, wodurch der Tubus 6 in seiner Sollposition auf der Leiterplatte 3 lagefixiert ist.

### Bezugszeichenliste

- (1): optischer Sensor
- (2): Gehäuse
- (3): Leiterplatte
- (4): Bildsensor
- (5): Leuchtdiode
- (6): Tubus
- (6a): Grundkörper
- (7): Objektiv
- (8): Scheibe
- (9): Microcontroller
- (10): Passstift
- (11): Zentrier-Sackloch-Bohrung
- (12): Sackloch
- (13): Gewindebuchse
- (15): Ansatz
- (16): Bohrung
- (17): Schraube
- (18): Halterung
- (19): Haken
- (20): Sockel

## Patentansprüche

1. Optischer Sensor (1) zur Erfassung von Objekten, mit einem Gehäuse (2), in welchem Elektronikkomponenten und wenigstens eine Sensorkomponente gelagert sind, wobei wenigstens eine Elektronikkomponente in Abhängigkeit von Sensorsignalen der oder einer Sensorkomponente ein Ausgangssignal generiert, **dadurch gekennzeichnet, dass** als Elektronikkomponente eine Leiterplatte (3) vorhanden ist, wobei auf einer eine Montageseite bildenden Seite die Sensorkomponente in einem Tubus (6) liegend angeordnet ist, und wobei der Tubus (6) mit Befestigungsmitteln befestigt ist, die alle auf oder an der Montageseite angeordnet und an der Montageseite montierbar sind.

2. Optischer Sensor (1) nach Anspruch 1, **dadurch gekennzeichnet, dass** die im Tubus (6) gelagerte Sensorkomponente ein Bildsensor (4) ist, wobei im Tubus (6) ein dem Bildsensor (4) vorgeordnetes Objektiv (7) angeordnet ist.

3. Optischer Sensor (1) nach einem der Ansprüche 1 oder 2, **dadurch gekennzeichnet, dass** auf der Montageseite der Leiterplatte (3) Lichtstrahlen emittierende Leuchtdioden (5) angeordnet sind, die eine Beleuchtungseinheit bilden, und/oder dass die der Montageseite gegenüberliegende Seite der Leiterplatte (3) eine Bauteilseite ist, auf welcher Elektronikkomponenten angeordnet sind.

4. Optischer Sensor (1) nach Anspruch 3, **dadurch gekennzeichnet, dass** auf der Bauteilseite der Leiterplatte (3) als Elektronikkomponente eine Rechnereinheit angeordnet ist, die eine Auswerteeinheit ausbildet, in der die Sensorsignale der oder einer Sensorkomponente zur Generierung des Ausgangssignals ausgewertet werden.

5. Optischer Sensor (1) nach einem der Ansprüche 1 bis 4, **dadurch gekennzeichnet, dass** der Tubus (6) zur Zentrierung auf der Leiterplatte (3) Passstifte (10) aufweist, die in Zentrier-Sackloch-Bohrungen (11) einführbar sind, die an der Montageseite der Leiterplatte (3) ausmünden.

6. Optischer Sensor (1) nach Anspruch 5, **dadurch gekennzeichnet, dass** die Passstifte (10) Befestigungsmittel zur Befestigung des Tubus (6) auf der Leiterplatte (3) bilden, in dem die Passstifte (10) in den Zentrier-Sackloch-Bohrungen (11) durch Klebeverbindungen fixiert sind.

7. Optischer Sensor (1) nach einem der Ansprüche 1 bis 6, **dadurch gekennzeichnet, dass** auf der Montageseite eine ringförmige Halterung (18) mit von deren Oberseite hervorstehenden Rastmitteln befestigt ist, und dass der Tubus (6) auf der Montageseite der Leiterplatte (3) aufsitzend mittels der Rastmittel befestigbar ist.

8. Optischer Sensor (1) nach Anspruch 7, **dadurch gekennzeichnet, dass** eine in Umfangsrichtung der ringförmigen Halterung (18) rotationssymmetrische Anordnung von identisch ausgebildeten Rastmitteln vorgesehen ist.

9. Optischer Sensor (1) nach einem der Ansprüche 7 oder 8, **dadurch gekennzeichnet, dass** die Rastmittel in Form von federnden Haken (19) ausgebildet sind.

10. Optischer Sensor (1) nach einem der Ansprüche 7 bis 9, **dadurch gekennzeichnet, dass** die Halterung (18) mit den Rastmitteln von einem Blechteil gebildet ist, und/oder dass die Halterung (18) auf der Montageseite der Leiterplatte (3) mittels einer Lötverbindung oder einer Klebeverbindung fixiert ist.

11. Optischer Sensor (1) nach einem der Ansprüche 7 bis 10, **dadurch gekennzeichnet, dass** der Tubus (6) einen hohlzylindrischen Grundkörper (6a) aufweist, an dessen Unterseite ein ringförmiger, über die äußere Mantelfläche des Grundkörpers (6a) hervorstehender Sockel (20) vorhanden ist, wobei der Tubus (6) dadurch auf der Montageseite der Leiterplatte (3) befestigt ist, dass die Rastmittel in Eingriff mit dem Sockel (20) sind.

12. Optischer Sensor (1) nach einem der Ansprüche 1 bis 5, **dadurch gekennzeichnet, dass** die Leiterplatte (3) an deren Montageseite ausmündende Sacklöcher aufweist, in welchen jeweils eine Gewindebuchse (13) gelagert ist, und dass zur Fixierung des Tubus (6) auf der Leiterplatte (3) in Aufnahmen des Tubus (6) gelagerte Schrauben (17) in die Gewindebuchsen (13) eingeschraubt werden.

13. Optischer Sensor (1) nach Anspruch 12, **dadurch gekennzeichnet, dass** die Gewindebuchsen (13) in den Sacklöchern eingelötet sind.

14. Optischer Sensor (1) nach einem der Ansprüche 12 oder 13, **dadurch gekennzeichnet, dass** der Tubus (6) einen hohlzylindrischen Grundkörper (6a) aufweist, an dessen Unterseite ein ringförmiger Ansatz (15) ausmündet, in welchem die Schrauben (17) gelagert sind, wobei die Schrauben (17) in Bohrungen (16) an der Oberseite des ringförmigen Ansatzes (15) gelagert sind.

15. Optischer Sensor (1) nach einem der Ansprüche 1 bis 14, **dadurch gekennzeichnet, dass** dieser ein Codeleser ist.
